# EUROPEAN PATENT SPECIFICATION

(11) **EP 0 362 262 B1**
(45) Date of publication and mention of the grant of the patent: **11.08.1993**
(21) Application number: 88905017.5
(22) Date of filing: 20.05.1988
(51) Int. Cl.: H05B 1/02, B60R 16/02

(54) **A HEATING AND/OR HEAT SUSTAINING SYSTEM**
HEIZ- UND/ODER WÄRMEERHALTUNGSSYSTEM
SYSTEME DE CHAUFFAGE ET/OU MAINTENANT LA CHALEUR

(30) Priority: 22.05.1987 SE 8702143
(43) Date of publication of application: 11.04.1990
(73) Proprietor: Nilsson, Leif, S-260 40 Viken (SE)
(72) Inventor: Nilsson, Leif, S-260 40 Viken (SE)
(74) Representative: Andersson, Andy Rudy
(86) International application number: SE8800261
(87) International publication number: WO8809594

(56) References cited:
- DE-A- 3 110 365
- DE-A- 3 200 749
- DE-C- 2 627 917
- US-A- 3 395 288
- US-A- 4 075 504
- Patent Abstracts of Japan, abstract of JP 58-22740, publ. 1983-02-10

## Description

The present invention relates to a system for heating and/or sustaining the warmth of at least one automotive vehicle part, such as the windscreen washing liquid reservoir, fuel tank, washing water conduits, fuel pipes, locks, door flashings, windscreen wiper blades, etc., said system comprising a heating device for heating respective vehicle parts and an electric energy source which can be connected to respective heating devices.

In order to hold the liquid in washing liquid containers above freezing point during the cold periods of the year, the liquid, which is often water, is admixed with an alcohol and optionally with an cleansing agent. Such liquids are expensive to buy and can have a negative effect on the varnish or paint surfaces of the vehicle.

It is known to use washing liquid containers on which a voltage is applied for the purpose of maintaining the liquid above freezing point.

It is also known to provide windscreen wipers with heating means.

Taking its starting point from the knowledge of the known technique, it is an object of the present invention to provide improved means for heating and/or sustaining the temperature of at least one automotive vehicle part, preferably a plurality of such parts.

Another object of the invention is to provide a system which will be operational both when the vehicle is in use and when the vehicle is parked.

These objects are achieved in accordance with the invention, which is defined in claim 1, by providing between the energy source and respective heating devices a switch means which is capable of selectively coupling the heating device to a relatively low power output or a relatively high power output.

It is proposed in accordance with the invention that the energy source comprises the vehicle battery or batteries. It is also proposed in accordance with the invention that the system is provided with means which enables the system to be connected to the electrical mains network as an auxiliary energy source, for the purpose of heating or sustaining the temperature of said vehicle parts when the vehicle is parked in a garage or outdoors.

Other significant and advantageous developments of the inventive system are set forth in the depending claims.

So that the invention will be more readily understood and further features thereof made apparent, together with advantages afforded by the invention, the invention will now be described with reference to a plurality of selected, exemplifying embodiments illustrated schematically in the accompanying drawing, in which
Figure 1 is a block schematic which illustrates application of the invention when heating a windscreen washing arrangement intended for automotive vehicles;
Figure 2 is a block schematic of a switch box suitable for use in an arrangement of the kind illustrated in Figure 1;
Figure 3 is a block schematic which illustrates application of the invention for use of the same arrangement as that shown in Figure 1 but while additionally heating the door locks and/or sealing strips of the vehicle;
Figure 4 is a a block schematic which illustrates application of the invention when heating a fuel tank in a vehicle driven by a diesel engine; and
Figure 5 is a schematic vertical section of a fuel tank which can be heated with the aid of the arrangement illustrated in Figure 4.

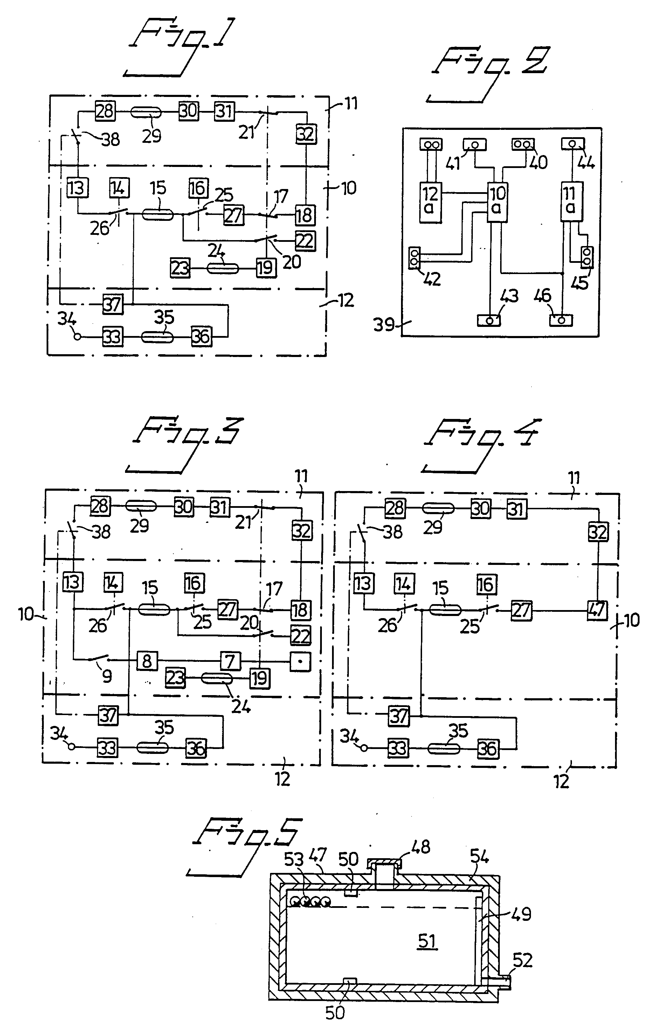

The inventive arrangement or system illustrated in Figure 1 for heating the windscreen washer system of an automotive vehicle comprises a main system, a low power system and an optional garage system 10, 11, and 12 respectively. The main system 10 includes the vehicle battery 13, which is connected to an electrical heating device (not shown) via the ignition switch 14, a fuse device 15, a thermostat relay 16 and a relay contact 17, for the purpose of heating, either directly or indirectly, the content of a washing liquid container 18 and optionally also the jets or nozzles of the windscreen washing system, and further includes hoses for conducting washing liquid between the container 18 and the aforesaid jets or nozzles, and also includes the rubber and/or plastic components of the windscreen wipers and headlamp wipers in contact with the windscreen and the headlamp glass respectively.

The electrical contact or switch 17 constitutes one of three contacts capable of being activated by a relay 19, of which contacts the remainder are designated 20 and 21 respectively. The contact 20 is connected between the safety fuse 15 and a washing motor indicated at 22, the arrangement being such that the contact or switch 20 will close when the contacts or switches 17, 21 are opened, and vice versa.

The relay 19 is operated via a washing activating device 23, e.g. in the form of a press button, and a safety fuse 24; more specifically, when the device 23 is activated, current is supplied to the relay 19 such as to energize the relay wherewith the contact 20 is closed and the contact 17, 21 opened, so that the supply of current from the battery 13 to the tank heating device etc. is held interrupted during the pro activated period of the washer motor 22. This avoids, in an advantageous manner, the occurrence of creepage currents through the washing liquid to the chassis of the vehicle when washing the windscreen and headlamp glass.

The relay 16 is constructed to hold the contact 25 closed for as long as the temperature of the liquid in the washing liquid container is beneath a pre-determined value, for example, the relay 16 can be operated via a thermistor (not shown) which is intended to determine the temperature of the washing liquid and which holds the relay 16 open for as long as the washing liquid temperature lies beneath said pre-determined value. One advantage afforded by the system is that it engenders thermal inertia such as to avoid fluttering of the thermistor and the relay 16 respectively, Thus, when the vehicle engine is started and the contact 26 of the ignition switch is therewith closed, current is supplied to the device intended for heating the washing liquid in the container 18 etc., for as long as the washing activating device 23 remains unactivated and the desired temperature of the liquid in the tank 18 has not been reached. The reference 27 identifies a power control circuit, which is operative in controlling the power taken from the battery 13 during running of the vehicle and in adjusting said power in response to-the requirements of the heating devices serving respective vehicle parts.

The lower power system, generally referenced 11, by which the windscreen washing arrangement can be heated when the vehicle is not being used, includes a battery monitor 28, a safety fuse 29, a timing circuit 30, a thermostat circuit 31 and the relay contact 21, these components being connected in series with one another between the battery 13 and the container 18. The battery monitor 28 includes a switch (not shown) which is broken when the remaining energy in the battery 13 falls beneath a pre-determined value, so as to ensure that the battery will always contain sufficient energy to start the vehicle.

The timing circuit 30 may comprise an adjustable time circuit in the form of a switch capable of establishing a connection between the fuse 29 and the circuit 31 at a pre-set time and optionally over a similary pre-set limited time period. The thermostat circuit 31 may advantageously comprise a thermistor controlled relay similar to the aforedescribed thermostat relay 16 with associated electrical contact or switch 25, the thermistor being selected so that the washing liquid container etc. will only be heated when the need prevails. The sensors of the thermostats may be thermistors or utilize the properties of the material from which the container is made. The relay contact 21 prevents, in the aforedescribed manner, current from passing to the heating device while the wash activating device 23 remains activated. The reference 32 identifies a power control circuit which is connected between the electrical contact 21 and the container 18 for controlling the power output through the low power system 11.

The garage system, generally referenced 12, includes a transformer 33 which can be supplied with mains voltage (e.g. 220 volt) through a terminal 34 and which is intended to step down the applied voltage to the intended battery voltage (e.g. 12 volts). The output terminal of the transformer 33 is connected by means of a fuse device 35 and a rectifier 36 to a relay 37 which when voltage is applied opens an electrical contact 38 in the low-power part of the system between the battery 13 and the battery monitor 28, and also to the input terminal of the safety device 15. This arrangement thus enables the container 18 to be kept warm when the vehicle is parked in a location when there is access to electrical current from an external current source, e.g. a garage. Heating of the container 18 is controlled through the illustrated switching arrangement advantageously with the aid of the control circuit 16 and 27 of the main system 10.

The junction box illustrated schematically in Figure 2, which box is advantageously made moisture-proof, includes a mounting plate 39 on which certain of the components significant of the system according to the invention are mounted. Thus, the references 10a and 11a identify generally parts of the main system 10 and the low power system 11, the part 10a of the main system 10 may include the fuse device 15, the relay 16, 25, the power control circuit 27 and the relay 19 with relay contacts 17, 20 according to Figure 1. The battery 13, the ignition switch 14 and the washer activating or control device 23, the washer motor 22 and the container 18 with accessories are assumed to be located in their normal positions in the vehicle, and similarly the fuse device 24 may be placed in the conventional fuse box of the vehicle. The ignition switch 14 with associated electrical contact 26, the wash activating device 23 and the fuse device 24 are connected to the system part 10a, more specifically to the input of the fuse device 15 and to the relay 19 respectively, via terminals 40 and 41. The thermostat relay 16 and itsthermistor are mutually connected via the terminal 42, whereas the relay contact is connected to the washer motor 22 via the terminal 43. The part 11a of the low power system 11 is assumed to include the circuits 28, 30, 31, 32 and the relay contacts 21 and 38, and the fuse device 29 according to Figure 1, and thus the battery monitor 28 and the fuse device 29 are located within the junction box, which ensures that only an optimally small amount of current will be taken from the battery. The reference 44 identifies a terminal via which the battery 13 is electrically connected to the low power system over the conventional junction box of the vehicle, more specifically to the relay contact 38 of the low power system. The thermostat circuit 31 and its thermistor are mutually connected via the terminal 45, whereas the part 10a of the main system and the part 11a of the low power system are connected to the washing liquid container 18 via the terminal 46.

The embodiment illustrated in Figure 3 corresponds to the Figure 1 embodiment, but with the exception that the battery 13 in the main system 10 is intended to heat the vehicle door locks and/or the sealing strips between doors and vehicle chassis, over a switch 9, this additional facility being an advantage over the Figure 1 embodiment. The switch 9 may be a microswitch and is mounted, for instance, on a handle of one of the vehicle doors. A time circuit 8 may be provided for breaking the current supply after a pre-determined time lapse, e.g. a time lapse of 20 seconds. Similarly, a thermostat 7 may be provided for ensuring that the current source is not unnecessarily loaded. This facility is solely connected to the main system 10 and the low power system 11, i.e. is activated when the vehicle is parked temporarily outside.

A practical example of this embodiment is described here-below.

Figure 4 illustrates a system according to the invention for heating a cold-sensitive fuel system of a vehicle which is driven by a diesel engine. The system illustrated in Figure 4 is similar to the system illustrated in Figure 1, although with the exception that the elements 17-24 of the Figure 1 embodiment have been excluded in the Figure 4 embodiment. The outputs of the power control circuits 27 and 32 are connected to the heating devices (not shown) which are intended to maintain the contents of a diesel fuel tank 47 at a given minimum temperature and optionally also to maintain pipes and like conduits between the tank 47 and the vehicle engine at a given minimum temperature. The system illustrated in Figure 4 functions in the manner described above with reference to Figure 1, i.e. the main system 10 is operative while the vehicle is being driven, whereas the low power system 11, in the absence of an external current source, can be utilized for relatively short periods, for instance periods of one or two calendar days, prior to putting the vehicle into use, while the so-called garage system 12 can be utilized when access is had, e.g., to the mains current supply. Although not shown, the garage system 12 and also the system illustrated in Figure 1 may optionally include an electric engine heater.

The fuel tank 47 of the Figure 5 embodiment is preferably made partially of the plastics material CT 6011:70, as hereinafter described. The reference 48 identifies a conventional fuel cap while reference 49 identifies a level indicator which is connected to a fuel gauge on the vehicle instrument panel in a manner not shown. The reference 50 identifies a thermostat sensor which, when the desired fuel temperature is reached, interrupts the supply of energy to the heating devices (not shown) for sustaining the temperature of the fuel 51 and also the temperature of the fuel pipes which extend from the pipe connector 52, each of these heating devices being supplied with current by respective systems 10, 11, 12. The reference 53 identifies a layer of spherical bodies which cover the fuel surface, either completely or partially, and which preferably have heat storage properties and a lower relative density than the fuel 51. When the fuel 51 in the tank 47 is heated, there is engendered a given liquid flow which moves around the bodies 53 in the tank 47 and equalizes the temperature of the fuel. The fuel tank 47 is also surrounded by a layer of material 54 designated ISOFIBER STRUKTUR and retailed by the Norwegian company Svelvik Fiber A/S. This material has been tested for fire resistance in accordance with NS 3903 and has been found an acceptable material for the use intended here.

The systems and arrangements described here depart from a heating arrangement or device not specifically shown in the drawings.

It has been found that when the washing liquid container 18 and the fuel tank of the Figure 4 embodiment are comprised solely or partially of an electrically conductive butyl-grafted HD polythylene, which is a thermostatic material of high electrical conductivity sold under the designation CT 6011:70, important advantages are obtained. For instance, the material has a melting index of 20 according to ASTM D 1238, a Shore hardness of 62 according to ASTM D 2240. Heat generation is affected by incorporating electrodes in the material and connecting the electrodes to the battery. The electrical resistance of the material is adapted so that both a weak voltage (12 V) and a normal mains voltage (220 V) will provide good heating power. The material is well suited for the construction of diesel oil tanks, since no static electricity is generated, which eliminates the risk of sparking and explosion. The electrical conductivity of this material is high and extends over a broad temperature range of -40^{o}C - 120^{o}C.

The nature of the material is also such that the electrical resistance therin is dependent on the temperature of the material, thereby enabling the inventive thermostat circuits to be controlled by detecting the resistance in the material.

The arrangement illustrated in Figure 3 which includes means for heating or thawing out the door locks of an automotive vehicle and/or the sealing strips between vehicle doors and vehicle chassis can be realized by providing the bolt or catch of the door lock with a layer of the electrically conductive material designated CT 6002:70. The inclusion of thin electrodes in the material and connection of said electrodes to the current source in the manner illustrated in Figure 3 will provide means whereby a frozen door lock can be thawed out in a simple manner. The door strips may be made totally or partially from said material CT 6002:70 and connected electrically to the current source. In this case, the microswitch 9 may be constructed to apply a voltage on the electrical conductors passing to the door lock and to the door strips.

Similarly, the hoses extending between washing liquid container and washing nozzeles may be made, completely or partially, of the material CT 6002:70, thereby enabling the hoses to be heated so that liquid is able to flow freely along the hoses and out through the washer nozzles. The inventive system, e.g. the system illustrated in Figure1, Figure 3 or Figure 4, is accommodated in a box whose size can be compared with the larger type of match box. This compact arrangement thus also includes the terminals 40, 41, 42, 43, 44, 45 and 46, illustrated in Figure 2. The system can thus be readily mounted on any suitable location in a vehicle.

## Claims

1. A system for heating and/or sustaining the temperature of at least one automotive vehicle part, such as windscreen wash water container, fuel tank, wash water hoses, fuel pipes, locks, door strips, windscreen wiper blades etc., including a heating device for respective vehicle parts and a source of electrical energy capable of being connected to respective heating devices and suitably comprising the vehicle battery or batteries, characterized by switch means for selectively connecting the energy source (13) to a respective heating device or devices through the intermediary of a high power circuit (14-27, 26, 27) for supplying relatively high power to said respective device or devices, or a low power circuit for supplying relatively low power to said respective device or devices, said high power circuit being intended to apply power to the said respective device or devices solely when the vehicle is being used.

2. A system according to Claim 1, characterized in that the high power circuit (14-17, 26, 27) includes a make contact (26) which is controlled by the vehicle ignition switch (14) such as to activate a high power circuit when the vehicle engine is switched on.

3. A system according to Claim 1 or Claim 2, comprising a third electrical circuit (12) which enables the system to utilize the mains supply (34) as an auxiliary energy source for sustaining the warmth of said vehicle parts, characterized in that the third circuit (12) includes an electric relay (37) which when mains voltage is applied to the third circuit (12) is intended to break an electric contact (38) in said circuit so as to hold the low power circuit disengaged.

4. A system according to Claims 2 and 3, characterized in that as seen from the mains supply (34) the third circuit (12) includes in a known manner a transformer (33) and a rectifier (36), and in that the output of the rectifier (36) is connected to the high power circuit downstream of the make contact (26).

5. A system according to any of Claims 1-4, characterized in that as seen from the energy source (13) the low power circuit (21, 28-32, 38) includes a battery monitor (28), a timing circuit (30), a thermostat circuit (31), and a power regulator (32).

6. A system according to any of Claims 2-5, characterized in that the high power circuit (14-17, 25-27) includes downstream of the make contact (26) controlled by the ignition (14) and downstream of the third circuit (12) connection point a contact (25) which is controlled by a thermostat relay, and a power regulator (27), connected in series with the contact (25)

7. A system according to any of Claims 1-6 for heating the vehicle windscreen washing system, characterized by a relay (19) which is energized upon activation of the wash activating device (23), such as to start the wash motor (22), said relay (19) activating herewith a respective contact (17, 21 and 19) in the high power circuit, the low power circuit and the power supply circuit of the motor (22), of which contacts the contacts (17, 21) in the high power and low power circuits are broken when the contact (20) in the power supply circuit of the motor (22) is made.

8. A system according to any of the preceding claims characterized by means (16) for interrupting the power supply when respective vehicle parts have reached a given temperature.

9. A system according to any of the preceding claims, characterized by means (28) for interrupting the power supply when the vehicle battery has discharged to a given level.

10. A system according to any of the preceding claims, characterized by means (30) for interrupting the power suplly subsequent to the passage of a given period of time, optionally a resettable time period.

11. A system according to any of the preceding claims, characterized by means (27, 32) for controlling and setting the power taken from the battery.

12. A system according to any of the preceding claims, characterized by means (30) for coupling power to the low power circuit at a given time point or for a given period of time.

13. A system according to any of the preceding claims, including means for heating door locks and/or door sealing strips, characterized in that the circuit (7, 8) for supplying current to said vehicle parts includes a timing circuit (8) which is intended to interrupt the supply of current subsequent to the lapse of a given time period.

## Patentansprüche

1. System zum Aufheizen und/oder Aufrechterhalten der Temperatur mindestens eines Teils eines Kraftfahrzeugs, wie z.B. Scheibenwaschwasserbehälter, Kraftstoffbehälter, Waschwasserschläuche, Kraftstoffleitungen, Schlösser, Türdichtungen, Scheibenwischerblätter usw., umfassend eine Heizeinrichtung für die betreffenden Fahrzeugteile und eine elektrische Energiequelle, die mit den betreffenden Heizeinrichtungen verbindbar ist und geeigneterweise die Fahrzeugbatterie oder die Batterien umfaßt, **gekennzeichnet** durch Schalteinrichtungen zum wahlweisen Verbinden der Energiequelle (13) mit einer entsprechenden Heizeinrichtung oder entsprechenden Heizeinrichtungen unter Zwischenschaltung eines Vollastkreises (14-27, 26, 27) zur Zufuhr einer verhältnismäßig hohen Leistung an die betreffende Einrichtung oder die Einrichtungen, oder eines Teillastkreises für die Zufuhr einer verhältnismäßig geringen Leistung zu der betreffenden Einrichtung oder den Einrichtungen, wobei der Vollastkreis dazu dient, der betreffenden Einrichtung oder den Einrichtungen nur im Betriebszustand des Fahrzeugs Leistung zuzuführen.

2. System nach Anspruch 1, dadurch **gekennzeichnet**, daß der Vollastkreis (14-17, 26, 27) einen Folgekontakt (26) umfaßt, der mit dem Schalter (14) für die Fahrzeugzündung derart gesteuert wird, um einen Vollastkreis zu aktivieren, wenn der Fahrzeugmotor gestartet wird.

3. System nach Anspruch 1 oder 2, umfassend einen dritten elektrischen Kreis (12), der es dem System ermöglicht, die Netzstromversorgung (34) als Hilfsenergiequelle zu benutzen, um die Wärme der besagten Fahrzeugteile zu erhalten, dadurch **gekennzeichnet**, daß der dritte Kreis (12) ein elektrisches Relais (37) umfaßt, das einen elektrischen Kontakt (38) in dem besagten Kreis unterbricht, um den Teillastkreis abgetrennt zu halten, wenn dem dritten Kreis (12) Netzstromspannung zugeführt wird.

4. System nach Anspruch 2 und 3, dadurch **gekennzeichnet**, daß von der Netzstromversorgung (34) aus gesehen der dritte Kreis (12) in bekannter Weise einen Transformator (33) und einen Gleichrichter (36) umfaßt und daß der Ausgang des Gleichrichters (36) stromabwärts von dem Folgeschalter (26) mit dem Vollastkreis verbunden ist.

5. System nach einem der Ansprüche 1 bis 4, dadurch **gekennzeichnet**, daß von der Energiequelle (13) aus gesehen der Teillastkreis (21, 28-32, 38) eine Batterieanzeige (28), einen Zeitschaltkreis (30), einen Thermostatschaltkreis (31) und einen Leistungsschalter (32) umfaßt.

6. System nach einem der Ansprüche 2 bis 5, dadurch **gekennzeichnet**, daß der Vollastkreis (14-17, 25-27) stromabwärts von dem durch den Zündschalter (14) betätigten Folgeschalter und stromabwärts von dem Verbindungspunkt des dritten Kreises (12) einen von einem Thermostatrelais gesteuerten Schalter (25) und einen Leistungsregler (27) umfaßt, der zu dem Schalter (25) in Serie geschaltet ist.

7. System nach einem der Ansprüche 1 bis 6 zum Aufheizen des Fahrzeugscheiben-Waschystems, **gekennzeichnet** durch ein Relais (19), das beim Einschalten der Waschaktiviereinrichtung (23), wie zum Starten des Waschmotors (22), erregt wird, wodurch das Relais (19) einen entsprechenden Kontakt (17, 21 und 20) im Vollastkreis, im Teillastkreis und im Stromversorgungskreis des Motors (22) aktiviert, von welchen Kontakten die Kontakte (17, 21) im Vollastkreis und im Teillastkreis unterbrochen werden, wenn der Kontakt (20) im Stromversorgungskreis des Motors (22) geschlossen wird.

8. System nach einem der vorhergehenden Ansprüche, **gekennzeichnet** durch Mittel (16) zur Unterbrechung der Leistungszufuhr, wenn die betreffenden Fahrzeugteile eine bestimmte Temperatur erreicht haben.

9. System nach einem der vorhergehenden Ansprüche, **gekennzeichnet** durch Mittel (28) zur Unterbrechung der Leistungszufuhr, wenn die Fahrzeugbatterie auf ein bestimmtes Maß entladen ist.

10. System nach einem der vorhergehenden Ansprüche, **gekennzeichnet** durch Mittel (30) zur Unterbechung der Leistungszufuhr nach Ablauf einer bestimmten Zeitdauer, wahlweise einer neu einstellbaren Zeitdauer.

11. System nach einem der vorhergehenden Ansprüche, **gekennzeichnet** durch Mittel (27, 32) zur Steuerung und Einstellung der aus der Batterie entnommenen Leistung.

12. System nach einem der vorhergehenden Ansprüche, **gekennzeichnet** durch Mittel (30) zum Einspeisen einer Leistung in den Teillastkreis zu einem bestimmten Zeitpunkt oder für eine bestimmte Zeitdauer.

13. System nach einem der vorhergehenden Ansprüche, umfassend Einrichtungen zum Aufheizen der Türschlösser und/oder der Türdichtungsstreifen, dadurch **gekennzeichnet**, daß der Kreis (7, 8) für die Leistungszufuhr zu den besagten Fahrzeugteilen einen Zeitschaltkreis (8) umfaßt, der dazu dient, die Stromzufuhr nach Ablauf einer bestimmten Zeitdauer zu unterbrechen.

## Revendications

1. Un système pour chauffer et/ou maintenir la température d'au moins un élément de véhicule automobile, tel qu'un réservoir d'eau de lavage de pare-brise, un réservoir de carburant, des tuyaux flexibles d'eau de lavage, des tuyaux de carburant, des serrures, des joints de porte, des balais d' essuie-glace, etc., comprenant un dispositif de chauffage pour des éléments de véhicule respectifs, et une source d'énergie électrique pouvant être connectée à des dispositifs de chauffage respectifs, et avantageusement constituée par la ou les batteries du véhicule, caractérisé par des moyens de commutation destinés à connecter sélectivement la source d'énergie (13) à un ou plusieurs dispositifs de chauffage respectifs, par l'intermédiaire d'un circuit à puissance élevée (14-17, 26, 27), pour fournir une puissance relativement élevée au dispositif ou aux dispositifs respectifs, ou d'un circuit à faible puissance pour fournir une puissance relativement faible au dispositif ou aux dispositifs respectifs, le circuit à puissance élevée étant destiné à fournir de la puissance au dispositif ou aux dispositifs respectifs exclusivement lorsque le véhicule est en cours d'utilisation.

2. Un système selon la revendication 1, caractérisé en ce que le circuit à puissance élevée (14-17, 26, 27) comprend un contact ouvert au repos (26) qui est commandé par l'interrupteur d'allumage du véhicule (14), de façon à activer un circuit à puissance élevée lorsque le moteur du véhicule est mis en marche.

3. Un système selon la revendication 1 ou la revendication 2, comprenant un troisième circuit électrique (12) qui permet au système d'utiliser le secteur (34) à titre de source d'énergie auxiliaire pour maintenir la chaleur des éléments de véhicule précités, caractérisé en ce que le troisième circuit (12) comprend un relais électrique (37) qui est destiné à ouvrir un contact électrique (38) dans le troisième circuit (12), lorsque la tension du secteur est appliquée à ce circuit, de façon à maintenir le circuit à faible puissance hors fonction.

4. Un système selon les revendications 2 et 3, caractérisé en ce que vu du secteur (34), le troisième circuit (12) comprend, d'une manière connue, un transformateur (33) et un redresseur (36), et en ce que la sortie du redresseur (36) est connectée au circuit à puissance élevée en aval du contact ouvert au repos (26).

5. Un système selon l'une quelconque des revendications 1-4, caractérisé en ce que, vu de la source d'énergie (13), le circuit à faible puissance (21, 28-32, 38) comprend un dispositif de contrôle de batterie (28), un circuit de temporisation (30), un circuit de thermostat (31) et un régulateur de puissance (32).

6. Un système selon l'une quelconque des revendications 2-5, caractérisé en ce que le circuit à puissance élevée (14-17, 25-27) comprend, en aval du contact ouvert au repos (26), commandé par l'interrupteur d'allumage (14), et en aval du point de connexion du troisième circuit (12), un contact (25) qui est commandé par un relais thermostatique, et un régulateur de puissance (27), connecté en série avec le contact (25).

7. Un système selon l'une quelconque des revendications 1-6, pour chauffer le système de lavage du pare-brise du véhicule, caractérisé par un relais (19) qui est excité sous l'effet de l'activation du dispositif d'activation de lavage (23), de façon à faire démarrer le moteur de lavage (22), ce relais (19) activant un contact respectif (17, 21 et 19) dans le circuit à puissance élevée, le circuit à faible puissance et le circuit d'alimentation du moteur de lavage (22), et parmi ces contacts, les contacts (17, 21) dans les circuits à puissance élevée et à faible puissance sont ouverts lorsque le contact (20) dans le circuit d'alimentation du moteur de lavage (22) est fermé.

8. Un système selon l'une quelconque des revendications précédentes, caractérisé par des moyens (16) qui sont destinés à interrompre l'alimentation lorsque les éléments de véhicule respectifs ont atteint une température donnée.

9. Un système selon l'une quelconque des revendications précédentes, caractérisé par des moyens (28) qui sont destinés à interrompre l'alimentation lorsque la batterie du véhicule s'est déchargée jusqu'à un niveau donné.

10. Un système selon l'une quelconque des revendications précédentes, caractérisé par des moyens (30) qui sont destinés à interrompre l'alimentation à la suite de l'écoulement d'une durée donnée, qui est facultativement une durée pouvant être restaurée.

11. Un système selon l'une quelconque des revendications précédentes, caractérisé par des moyens (27, 32) destinés à commander et à fixer la puissance qui est prélevée sur la batterie.

12. Un système selon l'une quelconque des revendications précédentes, caractérisé par des moyens (30) destinés à transmettre de la puissance au circuit à faible puissance à un instant donné ou pendant un intervalle de temps donné.

13. Un système selon l'une quelconque des revendications précédentes, comprenant des moyens pour chauffer des serrures de porte et/ou des joints d' étanchéité de porte, caractérisé en ce que le circuit (7, 8) qui est destiné à fournir du courant aux éléments de véhicule, comprend un circuit de temporisation (8) qui est destiné à interrompre l'application du courant à la suite de l' écoulement d'un intervalle de temps donné.
